(19) Europäisches Patentamt
European Patent Office
Office européen des brevets

(11) **EP 2 554 225 A1**

(12) **EUROPEAN PATENT APPLICATION**
published in accordance with Art. 153(4) EPC

(43) Date of publication:
**06.02.2013 Bulletin 2013/06**

(21) Application number: **11762454.4**

(22) Date of filing: **02.03.2011**

(51) Int Cl.:
*A63F 13/00* (2006.01)     *A63F 13/04* (2006.01)
*G06F 3/033* (2013.01)     *G06F 3/038* (2013.01)

(86) International application number:
**PCT/JP2011/054711**

(87) International publication number:
**WO 2011/122214 (06.10.2011 Gazette 2011/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2010 JP 2010078327**

(71) Applicant: **Capcom Co., Ltd.**
**Chuo-ku**
**Osaka-shi**
**Osaka 540-0037 (JP)**

(72) Inventor: **YAMANOUCHI Takaaki**
**Osaka-shi**
**Osaka 540-0037 (JP)**

(74) Representative: **Frost, Alex John et al**
**Boult Wade Tennant**
**Verulam Gardens**
**70 Gray's Inn Road**
**London WC1X 8BT (GB)**

(54) **PROGRAM AND RECORDING MEDIUM ON WHICH THE PROGRAM IS RECORDED**

(57) A computer functions as a posture change amount calculation unit that receives a detection value of a posture sensor provided in an operation device of a game and calculates an amount of change in posture of the operation device from a reference posture based on the detection value, an object control unit that controls an object of the game based on the amount of change in posture of the operation device calculated with the posture change amount calculation unit, and a reset unit that, when a prescribed condition is established during execution of the game, resets the reference posture of the operation device for calculating the amount of change in posture with the posture change amount calculation unit. Because the reference posture of the operation device is reset during execution of the game, detection error of the posture sensor decreases.

FIG.12

EP 2 554 225 A1

## Description

TECHNICAL FIELD

The present invention relates to a program and a recording medium for controlling the movement of an object displayed on a display device, where the control is based on posture information of an operation device.

BACKGROUND ART

Conventionally, home game machines using a display come with remote controllers. Among commercialized controllers, there are such types as incorporate a posture sensor, e.g., an angular velocity sensor or an acceleration sensor, for detection of the posture of the controller. Game programs using such controllers have been also commercialized.

A controller incorporating an angular velocity sensor outputs a detection signal of angular velocity detected with the angular velocity sensor to a game machine. The detection signal of an angular velocity sensor is a signal obtained by detecting the angular velocity at which the controller rotates around each of coordinate axes xyz of an orthogonal coordinate system set in the controller. The detection signal of an acceleration sensor is a signal obtained by detecting the acceleration of the controller in each direction of the coordinate axes xyz.

In the game machine, the amount of change in posture of the controller relative to a reference posture is calculated using the detection signal of the angular velocity sensor or the acceleration sensor. The reference posture is, for example, a posture in which an xz plane of the xyz coordinate system set in the controller coincides with a horizontal plane and the z axis faces the game machine. The amount of change in posture is the amount of change in the rotation angle of the controller around each of the coordinate axes or the amount of displacement of the controller in each direction of the coordinate axes.

The game machine controls the on-screen movement of a character or an object displayed on a display of the game machine, using the calculation result of the amount of change in posture of the controller. A character is, for example, an image of an animal, a person or the like, that is controlled by a user or a computer. Note that although an object is a concept that includes characters, hereinafter objects and characters are distinguished for convenience of description.

For example, in a tennis game, when a user swings the controller like a tennis racket, a player character displayed on the display makes the movement of swinging a tennis racket, based on changes in the posture of the controller at that time. A player character is a character whose on-screen actions are controlled by the operations of a user. Also, in an action game, when a user presses a prescribed button on the controller, the player character carries out the action of holding a gun at the ready, and a sights object showing the position at which the gun is aimed is displayed. Then, when the user shakes the controller up/down or right/left with the button pressed down, the display position of the sights changes on the display according to the change in posture (orientation) of the controller at that time.

In WO 2009/084213 A1, the following invention is disclosed in order to enable the user to see the situation around the player character via game images, in an action game in which the game develops in 3D virtual game space. That is, in this publication, an invention is disclosed in which a virtual camera disposed in 3D game space rotates around the circumference of a circle centered on the player character, according to the rotation of the controller having a built-in angular velocity sensor.

The invention disclosed in this publication can also be applied to an instance where the user is able to check the shape and design details of items such as trophies acquired by the player character in 3D game space. In this case, the computer rotates the virtual camera around the item according to the rotation of the controller. The computer generates a 360 degree omnidirectional video image of the item as a result of the rotation of this virtual camera, and displays the generated video image on the display.

Patent Document 1: WO2009/084213A1
Patent Document 2: JP 2009-101035A
Patent Document 3: JP 2010-5332A

DISCLOSURE OF THE INVENTION

Problem to be Solved by the Invention

In order to control the movement of characters and objects displayed on a display based on the rotation angle around each of the coordinate axes xyz of the controller, the rotation angles need to be detected as accurately as possible. However, for detecting the rotation angles from the reference posture of the controller using an angular velocity sensor, the rotation angles are calculated by integrating the angular velocities output from the angular velocity sensor (JP 2009-101035A and JP 2010-5332A). Thus, there is a problem in that error due to drift of the angular velocity sensor accumulates in the integrated value of angular velocities, and the detected rotation angles becomes inaccurate over time. Thus, when a game is played over a long period of time, the movement of characters and objects displayed on the display may fail to be appropriately controlled based on changes in the posture of the controller.

With game software in which the time from the start to the end of a game is comparatively short such as a tennis game, the user has to carry out a prescribed operation for resetting the reference posture of the controller every time a new game is started, for example. This operation is called a "calibration operation" and processing for resetting the reference posture of the controller performed by the computer is called "calibration processing."

When control is performed on a selection screen displayed on the display to move a cursor displayed on the display to a desired selection item as a result of the user shaking the controller, the cursor could, depending on how the user shakes the controller, disappear off the screen of the display so that the user no longer knows the position of the cursor. Thus, the user needs to perform the calibration operation. In this case, when the user carries out an operation of pressing a prescribed button as the calibration operation with the controller facing the display, for example, the computer performs processing to reset the display position of the cursor to a prescribed position on the display, based on the user operation.

However, with a game that takes a long time to play, such as Resident Evil® for example, the movement of a character or an object displayed on the display may fail to be controlled by utilizing changes in the posture of the controller, when such control is expected. This is because error in the rotation angles calculated from the angular velocities detected by the angular velocity sensor built into the controller increases over time.

In order to resolve this problem, it is conceivable for the computer to perform calibration processing on the controller periodically or at an appropriate timing during a game. However, when the calibration operation that the user carries out at the start of a game is also performed during the game, the computer will interrupt control of game development in order to perform the calibration processing. Thus, the problem arises where the calibration operation is stressful for a user who is absorbed in the game, and his or her enjoyment of or interest in the game wanes.

Also, generally with a game, loading game software onto a game machine from game media and getting the game ready to play requires the user to perform various selection operations and setting operations that require a certain amount of time. The inconvenience to the user is increased by adding the calibration operation to the operations for getting the game ready to play. Accordingly, it is preferable for the computer to perform the calibration processing automatically during the game if possible. However, to date, game software provided with such a function has not been proposed.

An object of the present invention is to provided a program that is able to automatically perform calibration processing on a controller provided with a sensor capable of detecting posture as a result of a prescribed operation by a user during a game, and is able to favorably control the movement of a character or an object on a game screen based on changes in the posture of the controller, and a recording medium on which the program is recorded.

MEANS FOR SOLVING THE PROBLEM

In order to solve the above problems, the present invention takes the following technical means.

A computer provided according to a first aspect of the present invention includes a posture change amount calculation unit that receives a detection value of a posture sensor provided in an operation device of a game and calculates an amount of change in posture from a reference posture of the operation device based on the detection value, an object control unit that controls an object of the game based on the amount of change in posture of the operation device calculated with the posture change amount calculation unit, and a reset unit that, when a prescribed condition is established during execution of the game, resets the reference posture of the operation device for calculating the amount of change in posture with the posture change amount calculation unit.

Note that the operation device is not only an operation device that is separate from the game device such as a controller, but also includes an operation member integrally provided in the main body of the game device as with a portable game device. In the latter case, the main body of the game device serves as an operation device that is operated by the user. Similarly, the display device is not only a display device that is separate from the game device such as a television monitor, but also includes a display integrally provided in the main body of the game device as with a portable game device.

With the program and recording medium, establishment of the prescribed condition can denote receipt of an operation signal indicating that a prescribed operation member of the operation device used to progress through the game was operated by the user.

With the computer, the prescribed operation member can be a first operation member for instructing a start of operation of the object by the user, and the object control unit can control the object, based on the amount of change in posture of the operation device, during a period from when an operation signal indicating operation of the first operation member by the user is received until when an operation signal of a second operation member for instructing an end of operation of the object by the user is received.

With the computer, the object control unit can include an initial display control unit that displays the object at a preset initial position on a display screen of a display device, based on the amount of change in posture of the operation device that was reset by the reset unit, when the operation signal indicating operation of the first operation member by the user is received, and a display position control unit that controls a display position of the object displayed on the display screen, until the operation signal indicating operation of the second operation member by the user is received, based on the amount of change in posture of the operation device calculated with the posture change amount calculation unit after resetting.

With the computer, the reset unit can reset the reference posture of the operation device, when the operation signal indicating operation of the first operation unit provided in the operation device by the user is received, and the object control unit can control the object based on the amount of change in posture of the operation device, during a period from when the operation signal indicating operation of the first operation member by the user is received until when the operation signal indicating operation of the second operation member provided in the operation device by the user is received.

With the computer, the first operation member and the second operation member can be composed of a momentary on-off switch, and the operation signal indicating operation of the first operation member by the user that is received by the computer can be an operation signal indicating that the momentary on-off switch was pressed and an operation signal indicating operation of the second operation member by the user that is received by the computer can be an operation signal indicating that pressing of the momentary on-off switch was released.

With the computer, the initial position can be a middle position of the display screen.

With the computer, the posture sensor can be an angular velocity sensor, and the posture change amount calculation unit can calculate a rotation angle obtained by integrating angular velocity detection values detected by the angular velocity sensor as an amount of change in posture from the reference posture of the operation device.

With the computer, the object can be an object displayed in order to assist the operation, when the user inputs prescribed operation information from the operation device to a game screen displayed on the display device. Also, the game screen can be a game screen that includes a shooting element, and the object can be a reference object that indicates a target of the shooting.

A recording medium provided according to a second aspect of the present invention is a computer-readable recording medium having recorded thereon a program for causing a computer to function as a posture change amount calculation unit that receives a detection value of a posture sensor provided in an operation device of a game, and calculates an amount of change in posture from a reference posture of the operation device, based on the detection value, an object control unit that controls an object of the game, based on the amount of change in posture of the operation device calculated with the posture change amount calculation unit, and a reset unit that resets the reference posture of the operation device for calculating the amount of change in posture of the posture change amount calculation unit, when a prescribed condition is established during execution of the game.

With the recording medium, establishment of the prescribed condition can denote receipt of an operation signal indicating that a prescribed operation member of the operation device used to progress through the game was operated by a user. Also, the prescribed operation member can be a first operation member for instructing a start of operation of the object by the user, and the object control unit can control the object, based on the amount of change in posture of the operation device, during a period from when an operation signal indicating operation of the first operation member by the user is received until when an operation signal of a second operation member for instructing an end of operation of the object by the user is received.

With the recording medium, the object control unit can include an initial display control unit that displays the object at a preset initial position on a display screen of a display device, based on the amount of change in posture of the operation device that was reset by the reset unit, when the operation signal indicating operation of the first operation member by the user is received, and a display position control unit that controls a display position of the object displayed on the display screen, until the operation signal indicating operation of the second operation member by the user is received, based on the amount of change in posture of the operation device calculated with the posture change amount calculation unit after resetting.

With the recording medium, the reset unit can reset the reference posture of the operation device, when the operation signal indicating operation of the first operation unit provided in the operation device by the user is received, and the object control unit can control the object based on the amount of change in posture of the operation device, during a period from when the operation signal indicating operation of the first operation member by the user is received until when the operation signal indicating operation of the second operation member provided in the operation device by the user is received.

With the recording medium, the first operation member and the second operation member can be composed of a momentary on-off switch, and the operation signal indicating operation of the first operation member by the user that is received by the computer can be an operation signal indicating that the momentary on-off switch was pressed, and an operation signal indicating operation of the second operation member by the user that is received by the computer can be an operation signal indicating that pressing of the momentary on-off switch was released.

In the recording medium, the initial position can be a middle position of the display screen. Also, the posture sensor can be an angular velocity sensor, and the posture change amount calculation unit can calculate a rotation angle obtained by integrating angular velocity detection values detected by the angular velocity sensor as an amount of change in posture from the reference posture of the operation device.

With the recording medium, the object is an object displayed in order to assist the operation, when the user inputs prescribed operation information from the operation device to a game screen displayed on the display device. Also, the game screen can be a game screen that includes a shooting element, and the object can be a reference object that indicates a target of the shooting.

ADVANTAGES OF THE INVENTION

According to the present invention, when the posture of an operation device changes during execution of a game, a computer receives a detection value of the change in posture detected by a posture sensor, and calculates the amount of change in posture of the operation device from a reference posture. Then, the computer controls display of an object on a display device based on the calculation result. That is, the computer performs control for changing the display position of the object on the display screen of the display device according to the amount of change in posture of the operation device. Then, when a prescribed condition is established during execution of a game, the computer resets the reference posture of the operation device, and calculates the amount of change in posture relative to the reset reference posture.

For example, when the user operates a prescribed operation member that is used to progress through the game, the computer resets the reference posture of the operation device, and calculates the amount of change in posture relative to the reset reference posture. For example, in an action game that includes action involving a player character attacking with a gun, the computer resets the posture of the operation device at that time as the reference posture, when the user operates a prescribed operation member for causing the player character to hold a gun at the ready during execution of the game. Accordingly, error in the amount of change in posture of the operation device subsequently calculated by the computer can be suppressed. As a result, the display position of a "sights" object displayed on the display device is controlled favorably and accurately based on the amount of change in posture of the operation device due to operation by the user.

Also, the computer performs calibration processing for resetting the reference posture of the operation device triggered by establishment of a prescribed condition. Establishment of a prescribed condition involves the user operating a prescribed operation member during execution of a game, for example. As a result of this control, the user is not subjected to the stress of the game being interrupted in order to perform calibration processing on the operation device. Accordingly, the user can focus on the game.

The other features and advantages of the present invention will become apparent from the detailed description given below with reference to the accompanying drawings.

BRIEF DESCRIPTION OF DRAWINGS

FIG. 1 shows a state where an object indicating sights of a gun is displayed when a player character displayed on a game screen is caused to carry out the action of holding the gun at the ready.
FIG. 2 is a perspective view showing the configuration of a game device according to an embodiment.
FIG. 3 is a block diagram showing the internal configuration of the game device according to the embodiment.
FIG. 4A is a top view showing the configuration of a stick controller.
FIG. 4B is a bottom view showing the configuration of the stick controller.
FIG. 5 illustrates the position of the stick controller in an XYZ coordinate system set in a camera.
FIG. 6 illustrates the relationship between a UVW coordinate system set in the stick controller and angular velocity detected by an angular velocity sensor.
FIG. 7 shows the relationship between the direction in which the stick controller is pointing and the display position of a cursor displayed on a display screen of a display.
FIG. 8 shows the UVW coordinate system set in the stick controller rotating as a result of changes in the posture of the stick controller.
FIG. 9 is a block diagram showing the internal configuration of the stick controller.
FIG. 10 illustrates a method of acquiring current position information of the stick controller from a captured image of a light emitting unit of the stick controller.
FIG. 11 shows the relationship between the position of the stick controller calculated in the XYZ coordinate system of the camera and the position of an object displayed on the display screen of the display.
FIG. 12 is a flowchart showing a processing procedure for displaying a sights object on a game image when generating the game image of each frame in a frame period.
FIG. 13 shows an exemplary change in processing contents per frame when the flowchart of FIG. 12 is executed over a number of frames.

MODE FOR CARRYING OUT THE INVENTION

The present invention will be described below with reference to the accompanying drawings, based on preferred embodiments where a program of an action game that includes a shooting element is executed on a home game device.

The action game according to an embodiment features a player character controlled by a user in 3D virtual game space and enemy characters that the player character plays against. The user achieves a prescribed objective while pitting the player character against numerous enemy characters. Enemy characters are characters controlled by a CPU (Central Processing Unit). The prescribed objective is, for example, to defeat the boss of a horde of enemy characters, to free a town overrun by enemy characters, or to search for hidden treasure.

In the action game, one user is able to control the actions of one player character using two types of controllers, namely, a pad controller and a stick controller. A pad controller is a type of controller that has a pad provided with a plurality of buttons, and the user operates the plurality of buttons while holding the pad with both hands. A stick controller is a rod-like controller that incorporates an angular velocity sensor as a posture sensor for detecting the posture of the stick controller.

The player character is armed with a plurality of weapons for attacking the enemy characters such as a "knife", a "gun" and a "bomb", for example. The player character is able to attack the enemy characters using the weapons as a result of the user operating one or both of the pad controller and the stick controller.

The posture sensor is built into the stick controller 4. Thus, with an attack using the gun, the user is able to control the gun attack action of the player character by an operation for changing the posture of the stick controller 4 (operation involving tilting or moving the controller main body).

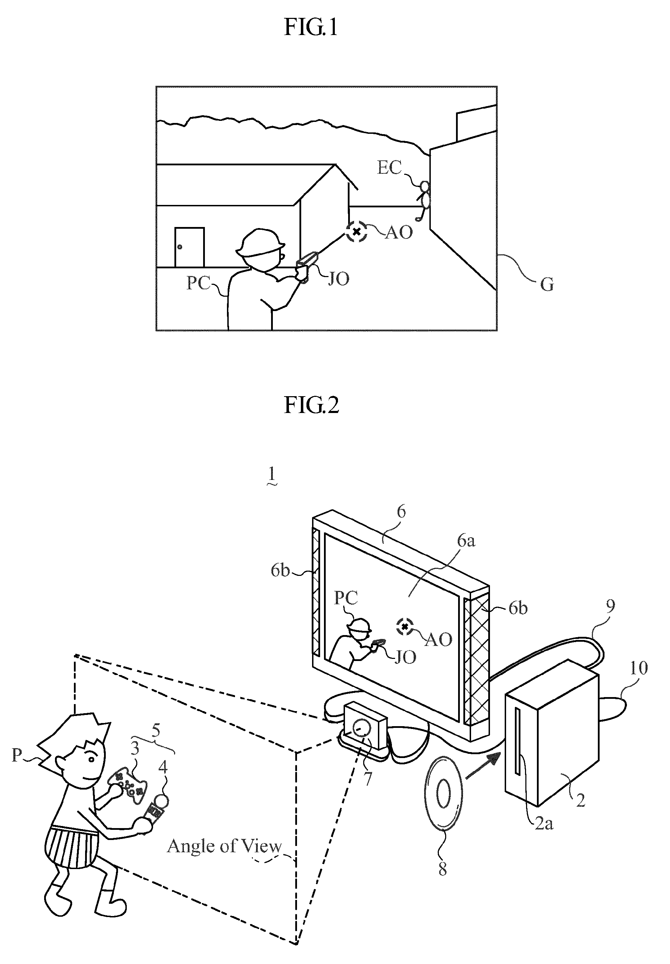

Specifically, when the user presses a prescribed button ("ready weapon button") for instructing the player character to hold the gun at the ready, among the plurality of buttons provided on the stick controller 4, a player character PC holds an object of a gun JO at the ready, and an object of sights AO indicating the direction in which the barrel of the gun JO is pointing is displayed, as shown in FIG. 1.

Then, when the user tilts or moves the stick controller 4 with the ready weapon button pressed down, the orientation of the posture of the player character PC holding the gun JO at the ready and the display position of the sights AO on a game screen G change, based on the change in the position and posture of the stick controller 4 due to the movement of the stick controller 4. That is, the user is able to change the direction of the barrel of the gun JO being held at the ready by the player character PC, by changing the position and posture of the stick controller 4.

Note that the position of the stick controller 4 is, to be precise, the position of a light emitting unit of the stick controller 4 in an XYZ coordinate system that is set in a camera which will be discussed later.

On the other hand, when the user releases the pressing operation of the ready weapon button, the player character PC will stop holding the gun at the ready and the sights AO displayed on the game screen G will be hidden. That is, the sights AO are only displayed on the game screen G when the player character PC is holding the gun JO at the ready as a result of the pressing operation of the ready weapon button by the user.

Then, when the user presses a prescribed button (fire button) when the display position of the sights AO are on an enemy character EC, the player character PC shoots the gun JO.

The display position of the sights AO on the game screen G is decided by position information and posture information of the stick controller 4. Current position information of the stick controller 4 can be acquired from an image of the stick controller 4 captured with a camera 7, as shown in FIG. 2.

Posture information of the stick controller 4 consists of respective rotation angles $\theta u$, $\theta v$ and $\theta w$ around the U, V and W coordinate axes of the UVW coordinate system set in the stick controller 4. The rotation angles $\theta u$, $\theta v$ and $\theta w$ are obtained by integrating angular velocities $\omega u$, $\omega v$ and $\omega w$ around each of the coordinate axes that are detected by the built-in angular velocity sensor. The posture of the stick controller 4 is set as a reference posture by calibration processing which will be discussed later at a prescribed timing. Accordingly, current posture information of the stick controller 4 consists of the respective rotation angles $\theta u$, $\theta v$ and $\theta w$ around the coordinate axes obtained by integrating the detection values of the angular velocity sensor for the U, V and W axes of the latest reference posture.

Error in the posture information (rotation angles $\theta u$, $\theta v$, $\theta w$) of the stick controller 4 can be suppressed, the shorter the integrated times of the angular velocities from the reference posture of the stick controller 4. In an embodiment, calibration processing for resetting the posture information (rotation angles $\theta u$, $\theta v$, $\theta w$) to zero is performed every time the ready weapon button of the stick controller 4 is pressed. The calibration processing is processing for resetting the posture of the stick controller when the ready weapon button is pressed as the reference posture.

Control of the display position of the sights AO is only performed for the period that the ready weapon button being pressed. The posture of the stick controller 4 at the start of this period is reset as the "reference posture". The display position of the sights AO is controlled using information on the change in posture of the stick controller 4 from this reference posture and information on the current position of the stick controller 4. Because error in the posture information of the stick controller 4 is suppressed in this control, the display position of the sights AO can be favorably controlled.

In view of this, the present invention will be described below, taking an example where the display position of the sights AO on the game screen G is controlled by the stick controller 4.

FIG. 2 is a perspective view showing the configuration of the game device according to an embodiment.

The game device 1 is constituted by a device main body 2 that executes a game program, a controller 5 serving as an operation member for a user P to input instructions required in order to execute the program to the device main body 2, and the like. A display 6 for displaying game images generated by executing the program is connected to the device main body 2. The pad controller 3 and the stick controller 4 are included in the controller 5. A camera 7 is required when the user P controls display of the sights AO by shaking the stick controller 4. Thus, the camera 7 is also connected to the device main body 2.

The display 6 is connected to the device main body 2 by a cable 9 such as an AV cable or an HDMI (High-Definition Multimedia Interface) cable, for example. The camera 7 is connected to the device main body 2 by a dedicated cable 10. A liquid crystal television or a computer monitor, for example, for example, is used as the display 6. The camera 7 is a CCD camera that uses a CCD (Charge-Coupled Device) color image sensor, for example.

The pad controller 3 and the stick controller 4 are connected to the device main body 2 by wireless communication. The Bluetooth® communication system, for example, is used for this wireless communication. Note that a communication system utilizing radio waves other than Bluetooth®, a communication system utilizing light (e.g., IrDA communication system), or a communication system utilizing sound waves may be used for the wireless communication system.

Also, the pad controller 3 may be connected to the device main body 2 by a dedicated cable. In this case, a configuration may be adopted in which the pad controller 3 and the stick controller 4 are coupled by wireless communication, and operation information of the stick controller 4 is transmitted to the device main body 2 via the pad controller 3.

A media insertion opening 2a is provided in the device main body 2. A disk medium 8 that uses an optical disc such as DVD-ROM or CD-ROM having the program recorded thereon is loaded in this media insertion opening 2a. When the disk medium 8 is loaded in the device main body 2, the CPU performs an initial loading process for automatically reading an initial loading program and data (including image data and sound data) required for execution of the program from the disk medium 8 into RAM (Random Access Memory) in the device main body 2. After the initial loading process, the CPU executes the program read into RAM and displays an initial screen (e.g., title screen) of the game on a display screen 6a of the display 6.

Thereafter, the CPU executes the program, based on an operation by the user P such as pressing a button or a key on the pad controller 3, rotating a joystick, or shaking the stick controller 4.

Note that the programs recorded on the disk medium 8 include a plurality of independent programs and a plurality of interrelated programs. In the action game, the game space is constituted by a plurality of fields. The player character PC achieves a prescribed objective in units of fields while playing against numerous enemy characters EC. Accordingly, the independent programs include programs for controlling the progress of the game in each field. The independent programs also include a program for calculating the display position on the display screen 6a of the display 6 for displaying the sights AO on the display screen 6a.

The programs for controlling the progress of the game include a plurality of programs for performing arithmetic operations, a program for performing graphics control, and a program for performing sound control. The plurality of programs for performing arithmetic operations include, for example, a plurality of programs for controlling the actions of the enemy characters EC, a program for controlling operation of the player character PC based on operation information input from the controller 5 as a result of operations by the user P, and a program for controlling events that arise in game space based on the actions of the player character PC. Events that arise in game space include, for example, the injury or death of the player character PC or an enemy character EC when facing off against each other, and damage to a building or the like due to the destructive actions of the player character PC. The program for performing graphics control renders, as game images, the processing results of arithmetic processing based on the programs for performing arithmetic operations. The program for performing sound control generates sound effects.

Data required in order to execute a program includes, for example, various types of numerical data required for arithmetic processing by the programs for performing arithmetic operations, image data required for render processing by the program for performing graphics control, and sound data required for sound output processing by the program for performing sound control. The numerical data includes, for example, parameter data indicating the strength or the attack/defensive power of the player character PC or enemy characters EC, parameter data for computing the distance between the player character PC and enemy characters EC, and various types of flag data.

The image data includes various types of data such as data for creating the images of characters such as the player character PC or enemy characters EC, data for creating the images of building objects and background that constitute the playing field, data for displaying information relating to the status of the player character PC during a game, and data of the sights AO displayed when the player character PC is holding the gun JO at the ready. The information relating to the status of the player character PC includes, for example, information on strength values, available weapons, protection, and maps.

In an embodiment, the game device uses the abovementioned image data to generate an image of a virtual game space captured from the player character PC side with a virtual camera disposed behind the player character PC (two-dimensional perspective projection method). The game device displays the generated two-dimensional image on the display 6 as the game image.

The sound data includes data for BGM, sounds made by the player character PC or enemy characters EC, and sound effects corresponding to various types of events such as collision sounds for when objects collide and explosion sounds for when bombs explode.

An example of interrelated programs is as follows. Suppose that a program for performing one type of processing is constituted by main routine and subroutine programs. In this case, the programs of both routines are "interrelated". The programs for controlling the progress of the game in the fields are constituted by a main routine program and a plurality of subroutines programs associated with the main routine.

The progress of the game in each field includes processing in which the player character PC plays against numerous enemy characters EC. The play includes attack processing in which the player character PC shoots enemy characters EC. This attack processing is executed as the processing of a subroutine associated with the main routine. That is, as a result of the attack processing subroutine being executed when a series of operation information for the player character PC to shoot an enemy character EC is input to the device main body 2 from the controller 5, the player character PC holds the gun JO at the ready and the sights AO are set on the enemy character EC. Thereafter, a series of operations involving bullets being fired is performed.

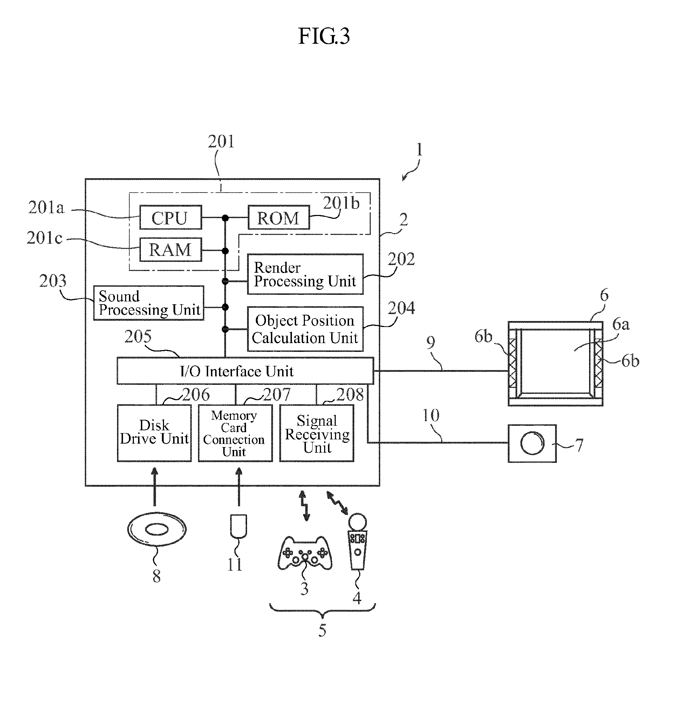

FIG. 3 is a block diagram showing the internal configuration of the game device 1 shown in FIG. 2.

The device main body 2 is provided with a control unit 201, a render processing unit 202, a sound processing unit 203, an I/O interface unit 205, a disk drive unit 206, a memory card connection unit 207, and a signal receiving unit 208. The render processing unit 202, the sound processing unit 203 and the I/O interface unit 205 are connected to the control unit 201. Also, the disk drive unit 206, the memory card connection unit 207 and the signal receiving unit 208 are connected to the I/O interface unit 205. Also, the display 6 and the camera 7 are respectively connected to the I/O interface unit via the cable 9 and the cable 10.

The I/O interface unit 205 mediates transmission and reception of data and signals between the disk drive unit 206, the memory card connection unit 207, the signal receiving unit 208, the display 6, the camera 7, and the control unit 201.

The disk drive unit 206 is a unit that reads out programs and data from the disk medium 8, based on loading instructions from the control unit 201. Loading instructions are read instructions designating programs to be loaded and data required for executing those programs. The disk drive unit 206 is constituted by an optical disk drive.

The memory card connection unit 207 performs writing of information to the memory card 11 and reading of information from the memory card 11. The memory card 11 saves data relating to progress of the game that has been preset, in order to be able to resume the game from the state at which the game was ended the previous time. Data saved to the memory card 11 includes, for example, data showing state of progress of the game, data relating to the character player set by the user, and data of various types of privileges such as points and items gained during the game. A flash memory, an SD card or the like, for example, is used for the memory card 11.

The control unit 201 outputs a data read instruction to the memory card connection unit 207, after reading out programs from the disk medium 8 at the start of a game. The memory card connection unit 207 reads out data relating to the progress of the game that was saved from the memory card 11 to the control unit 201, based on the data read instruction. Also, the control unit 201 outputs a data write instruction to the memory card connection unit 207, when "save data" operation information is input from the pad controller 3 during the progress of the game or at the end of the game. The memory card connection unit 207 writes data relating to the progress of the game that is to be saved to the memory card 11, based on the data write instruction.

The signal receiving unit 208 receives signals transmitted by short-range wireless communication from the pad controller 3 and the stick controller 4. The signal receiving unit 208 extracts operation information of both controllers and angular velocity information output from the angular velocity sensor built into the stick controller 4 included in the received signals, and inputs the extracted information to the control unit 201.

Programs are mainly executed by the control unit 201, the image processing unit 202, and the sound processing unit 203. The result of processing by these processing units is output to the display 6 via the I/O interface unit 205 and the cable 9. Image data included in the processing result is displayed on the display screen 6a of the display 6. Also, sound data included in the processing result is output from the speaker 6b of the display 6.

Data and programs executed by the control unit 201 are read into the control unit 201 from the disk medium 8 by the disk drive unit 206. Note that when data is saved in the memory card 11, the control unit 201 reads data from the memory card 11 via the memory card connection unit 207. Also, operation information of the controller 5 is input to the control unit 201 via the signal receiving unit 208 every time the controller 5 is operated.

Angular velocity information detected by the angular velocity sensor in the stick controller 4 is input to the control unit 201 via the signal receiving unit 208 at a prescribed period. This period (e.g., 12 milliseconds) is much shorter than the frame period at which the render processing unit 202 performs render processing. Given a frame rate of N frames/seconds, the frame period is 1/N seconds, or normally 1/30 seconds. The detection period of angular velocity information is 12 milliseconds, for example. The control unit 201 calculates rotation angles by performing an integration operation every time angular velocity information is input from the stick controller 4. These rotation angles are the accumulated values of the amounts of change in the respective angles around the axes of the UVW coordinate system of the reference posture of the stick controller 4. The control unit 201 transfers the calculated rotation angle to an object position calculation unit 204 as posture information.

Also, the display 6 and the camera 7 are respectively connected to the I/O interface unit 205 by the cable 9 and the cable 10. When a game is started, image data of the stick controller 4 captured by the camera 7 is input to the control unit 201 via the I/O interface unit 205 at a prescribed period. This period is also much shorter than the frame period, and is, for example, comparable to the period at which the stick controller 4 transmits angular velocity information. Whenever captured time data is image input, the control unit 201 transfers the image data to the object position calculation unit 204. The object position calculation unit 204 computes the position for displaying the sights AO on the display screen 6a, using the images captured by the camera 7 and the posture information of the stick controller 4.

The control unit 201 has a microcomputer that controls the overall operations of the device main body 2. The microcomputer is provided with a CPU 201 a, a ROM (Read Only Memory) 201 b, a RAM 201 c, and the like. The ROM 201 b and the RAM 201 c are connected to the CPU 201 a by a bus line.

The CPU 201 a administers control within the control unit 201, and performs arithmetic processing according to programs (particularly programs for performing arithmetic operations). The ROM 201 b stores basic programs for causing the CPU 201a to execute processing, in order to set the device main body 2 to a prescribed initial state when the device main body 2 is powered on, and to perform an initial loading process and set the device main body 2 to a game-ready state when the disk medium 8 is loaded into the media insertion opening 2a. Also, the RAM 201 c temporarily stores programs and data, in order for the CPU 201 a to perform arithmetic processing according to programs stored in the ROM 201 b or programs read out from the disk medium 8.

The CPU 201 a initially saves programs and data read out from the disk medium 8 by the disk drive unit 206 and data read out from the memory card 11 by the memory card connection unit 207 in the RAM 201 c. Also, the CPU 201 a executes programs using a work area of the RAM 201 c. Furthermore, the CPU 201 a mainly performs processing for computing changes in events that occur in game space, and reflecting the computed results in changes in game images and sound effects and changes in the status of the player character PC or enemy characters EC. The CPU 201 a thereby performs overall control of the state of progress of the game.

Generation of game images is performed by the render processing unit 202. Generation of sound effects is performed by the sound processing unit 203.

The render processing unit 202 generates a game image (two-dimensional image) of each frame based on a rendering instruction output every frame period from the CPU 201 a. The CPU 201 a decides the game image to be displayed on the display 6 using the abovementioned arithmetic processing. The CPU 201 a reads out data required for rendering the decided game image (polygon data of a character or an object, background image data, etc.), light source data and the like from the RAM 201 c, and supplies the read data to the render processing unit 202 together with a rendering instruction. Also, the CPU 201 a supplies position data of the player character PC and enemy characters EC in game space to the render processing unit 202. Furthermore, the CPU 201 a outputs an instruction for displaying or hiding the sights AO to the render processing unit 202, when an operation requiring that the sights AO be displayed or hidden is performed with the stick controller 4.

The render processing unit 202 performs computation of data required for performing rendering using image data and the like, based on the rendering command from the CPU 201 a. Also, the render processing unit 202 generates the game image for one frame in a VRAM (not shown) in the render processing unit 202 based on the computation result. Data required for performing rendering includes data such as the positional relationship between the player character PC, enemy characters EC, objects and the background, the coordinates of the polygon constituting each object on the screen of the display 6, the texture corresponding to each polygon, and the reflective characteristics of each polygon.

Also, the render processing unit 202 performs render processing for displaying the sights AO on the display screen 6a of the display 6 based on a display instruction from the CPU 201 a. Generated game images are converted into video signals every frame period and displayed on the display screen 6a of the display 6.

The sound processing unit 203 generates data for sound effects and BGM based on sound instructions from the CPU 201 a. The CPU 201 a decides the sound contents of sound effects and BGM to be output from the speaker 6b of the display 6. Also, the CPU 201 a outputs the contents thereof to the sound processing unit 203 together with a sound instruction. The sound processing unit 203 generates a sound signal by reading out data for sound effects and BGM from the RAM 201 c and performing prescribed finishing and D/A conversion processing on the read data, based on the instructed sound contents. The sound processing unit 203 outputs the generated sound signal from the speaker 6b of the display 6.

The object position calculation unit 204 calculates the position for displaying the sights AO on the display screen 6a of the display 6, using captured image data of the stick controller 4 input from the camera 7 and posture information input from the stick controller 4.

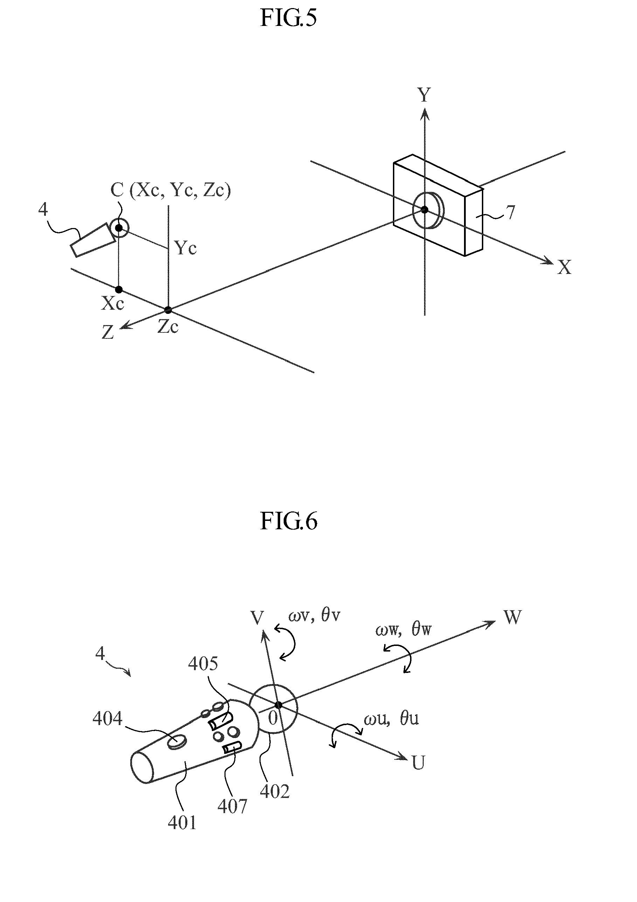

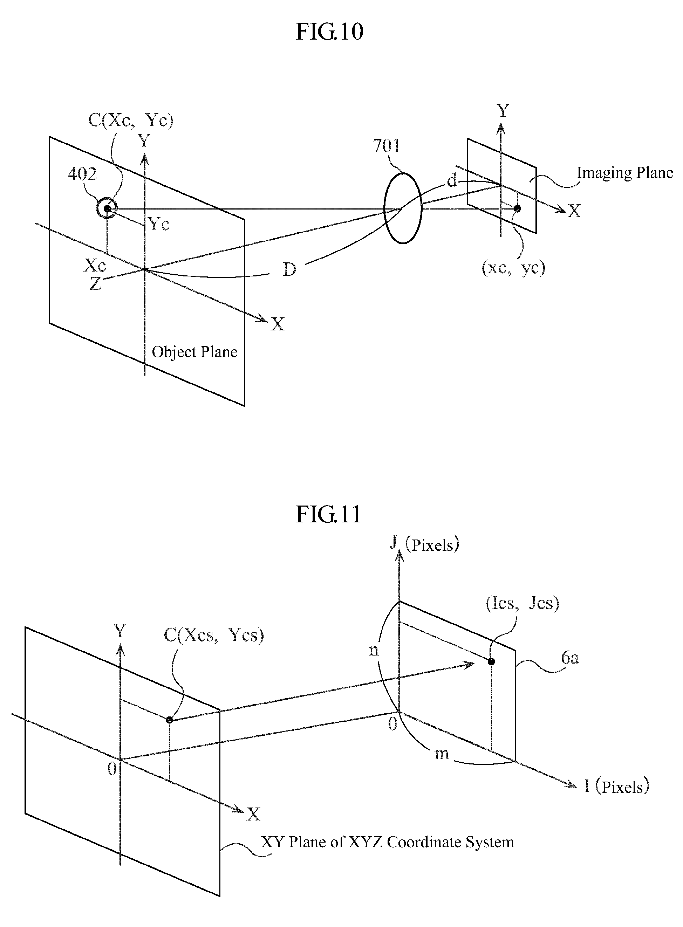

That is, the object position calculation unit 204 calculates the position coordinates (Xc, Yc, Zc) (see FIG. 5) of the light emitting unit 402 of the stick controller 4 in the XYZ coordinate system set in the camera 7 from the captured image. The object position calculation unit 204 furthermore corrects the XY coordinates (Xc, Yc) of the calculated values using the posture information input from the stick controller 4. Thereafter, the object position calculation unit 204 performs processing (see FIG. 11) for converting the corrected values (Xcs, Ycs) into coordinates (Ics, Jcs) of an IJ coordinate system (in units of pixels) of the display screen 6a. The converted coordinates (Ics, Jcs) are the display positions of the sights AO on the display screen 6a.

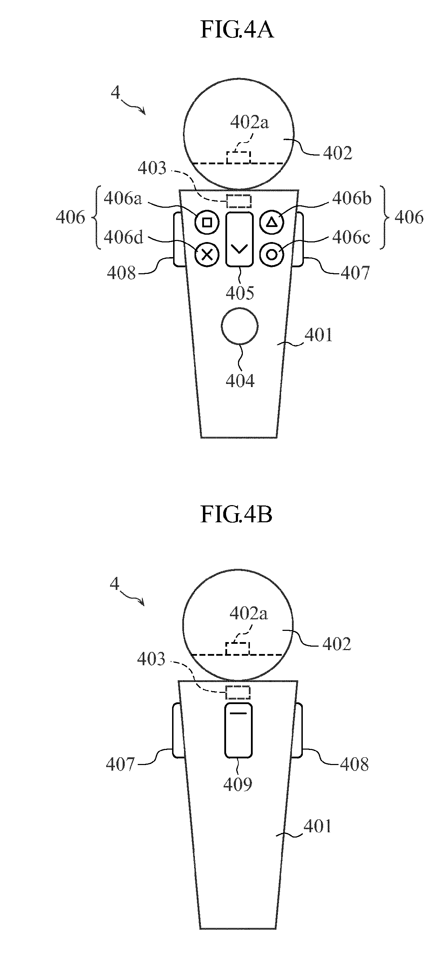

The object position calculation unit 204 performs the abovementioned arithmetic processing every time a captured image and posture information are input when a button (see button 409 of FIG. 4B) for displaying the sights AO of the stick controller 4 is operated. The details of the processing for computing the display position of the sights AO by the object position calculation unit 204 will be discussed later.

The pad controller 3 is a well known game-dedicated controller that has operation members disposed on the upper face and front side face of a low-profile casing. Four keys and four buttons (buttons marked with a square, a circle, a triangle and an X) are provided on the left ends and right ends of the upper face of the pad controller 3. A pair of sticks R are provided on the lower right side of the four keys and the lower left side of the four buttons. Buttons are also provided at both ends of the front side face of the pad controller 3.

The user P is able to control the actions of the player character PC and progress through the game by operating the keys and buttons of the pad controller 3.

FIG. 4A and FIG. 4B show the structure of the stick controller 4. FIG. 4A is a top view, and FIG. 4B is a bottom view.

The stick controller 4 is a rod-like controller having a spherical light emitting unit 402 that is provided at the tip of a cylindrical casing 401. The light emitting unit 402 incorporates a light emitting source 402a such as an LED. The light emitting unit 402 emits light spherically using light emitted by the light emitting source 402a. The light emitting unit 402 is captured using the camera 7. Using the captured image thereof, the coordinates of the stick controller 4 (to be precise, the coordinates (Xc, Yc, Zc) of the light emitting unit 402) in the XYZ coordinate system set in the camera 7 are calculated, as shown in FIG. 5.

Also, the casing 401 incorporates an angular velocity sensor 403. A MEMS (Micro Electro Mechanical System) gyroscope, for example, is used for the angular velocity sensor 403. The angular velocity sensor 403 detects the respective angular velocities ωu, ωv, and ωw around the U, V and W axes of the UVW coordinate system provided in the stick controller 4 in the reference posture, as shown in FIG. 6, when the stick controller 4 is shaken by the user P. The W axis is a direction parallel to a longitudinal direction of the casing 401. The V axis is a direction upwardly orthogonal to the W axis (direction of the button 405). The U axis is a direction rightwardly orthogonal to W axis (direction of the button 407). The control unit 201 calculates the respective rotation angles θu, θv, and θw around the axes of the stick controller 4 by integrating the angular velocities ωu, ωv and ωw detected by the angular velocity sensor 403.

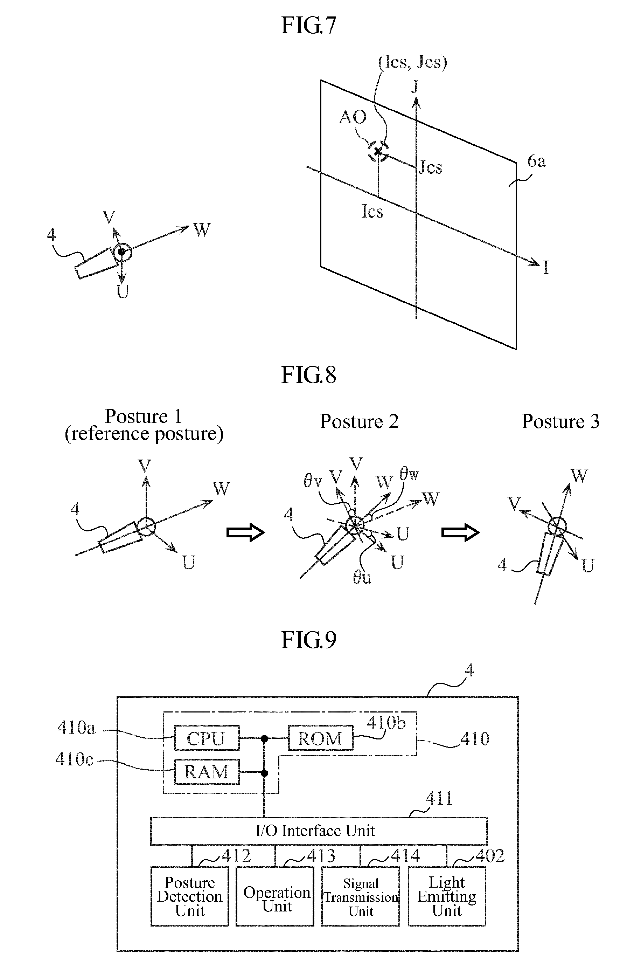

Information on the position of the stick controller 4 and information on the rotation angles of the stick controller 4 (posture information of the stick controller 4) is used for computing the display position (Ics, Jcs) on the display screen 6a of the display 6 when displaying the sights AO on the display screen 6a, as shown in FIG. 7. This computation method will be discussed later.

Note that the UVW coordinate system set in the stick controller 4 rotates when the stick controller 4 is tilted from a posture 1 to a posture 2, as shown in FIG. 8. Accordingly, the respective rotation angles (θu, θv, θw) around the U, V and W axes of the posture 2 based on the posture 1 indicate the amount of change in posture when the stick controller 4 has been changed from the posture 1 to the posture 2. In this case, the posture 1 is the reference posture.

The amount of change in posture of the stick controller 4 is the amount of change defined as the respective rotation angles (θu, θv, θw) around the U, V and W axes based on the direction of the axes in the reference posture. Accordingly, the rotation angles (amount of change in posture) change when the reference posture changes. That is, in FIG. 8, when the stick controller 4 is further tilted from the posture 2 to a posture 3, the amount of change in posture of the stick controller 4 is calculated as the rotation angles relative to the posture 1. In this case, when the posture is changed from the reference posture to the posture 2 at the point in time at which the stick controller 4 is tilted to the posture 2, the amount of change in posture of the stick controller 4 is calculated as the rotation angles for the posture 2. The amount of change in posture of the stick controller 4 thereby changes.

As mentioned above, when the respective rotation angles θu, θv and θw around the U, V and W axes are calculated by integrating the angular velocities detected by the angular velocity sensor 403, error caused by drift of the angular velocity sensor 403 is accumulated. As a result, the accuracy of each of the rotation angles θu, θv and θw decreases. In the present embodiment, in order to suppress the decrease in accuracy, calibration processing for resetting the integrated values of the angular velocities detected by the angular velocity sensor 403 to zero is performed every time the user P presses the ready weapon button of the stick controller 4, as will be described later.

In the example of FIG. 8, calibration processing is performed when the user P presses the ready weapon button of the stick controller 4 when in the posture 1. The integrated values of the angular velocities detected by the angular velocity sensor 403 are then reset to zero. The posture 1 thereby serves as the reference posture. Thereafter, the rotation angles θu, θv and θw are calculated with reference to the directions of the U, V and W axes in the posture 1. However, after the user P has released the operation of pressing the ready weapon button, calibration processing is performed again when the ready weapon button is pressed again when in the posture 2. The rotation angles $\theta u$, $\theta v$ and $\theta w$ calculated up to that time are each reset to "0". The posture 2 thereby serves as the new reference posture. Thereafter, the rotation angles $\theta u$, $\theta v$ and $\theta w$ are newly calculated with reference to the directions of the U, V and W axes in the posture 2.

As a result of the abovementioned calibration processing, the problem of not being able to perform motion control on the display position of the sights AO using the stick controller 4 due to error in the calculated values of the rotation angles of the stick controller 4 increasing during a game will not occur. Note that the contents of calibration processing will be discussed later.

As shown in FIG. 4A, a power button 404 is provided substantially in the middle of the upper face of the casing 401. A button 405 is provided on the upper side of the power button 404 on the upper face of the casing 401, and four buttons 406 including a button 406a, a button 406b, a button 406c and a button 406d are provided on either side of the button 405. Also, a button 407 and a button 408 are provided on the left and right side faces of the casing 401, and a button 409 is provided on the back face of the casing 401 in a position opposing the button 405.

A momentary on-off switch is provided for each of the button 404, the button 405, the button 406, the button 407, the button 408 and the button 409. When the user P presses any one of the abovementioned buttons, a signal indicating the button is being pressed is input to the device main body 2 from the stick controller 4. When a low level signal is allocated to a state where a button is not being pressed and a high-level signal is allocated to a state where a button is being pressed, for example, a low level signal is input to the CPU 201 a in the control unit 201 if the user P is not pressing a button. On the other hand, when the user P presses a button, a high-level signal is input for the duration that the button is being pressed.

The button 404, the four buttons 406, the button 407 and the button 408 are well known as controller buttons. Accordingly, description of these buttons is omitted, and hereinafter, the button 405 and the button 409 related to an operation that allows the player character PC to shoot according to the present invention will be described.

For the player character PC to shoot on the game screen G of FIG. 1, the user P needs to carry out a three-step operation involving (1) the player character PC readying the gun JO, (2) the user P deciding the firing direction (target) of the gun JO, and (3) the player character PC firing bullets from the gun JO. As a result of the user P carrying out the three-step operation, the player character PC performs the action of locating an enemy with the gun held at the ready, and firing bullets after setting the gun sights on the enemy.

In the present embodiment, the button 409 is allocated as the "ready weapon button" for instructing the player character PC to assume the posture of holding the gun JO at the ready. Also, the button 405 is allocated as the "fire button" for instructing that the action of firing the gun JO be carried out.

Accordingly, with the stick controller 4, when the button 409 is pressed, the sights AO are displayed at the same time as the player character PC holds the gun JO at the ready. Then, when the stick controller 4 is then shaken with the button 409 pressed down, the sights AO move on the display screen 6a of the display 6 in the direction in which the stick controller 4 was shaken. Furthermore, when the button 405 is pressed with the button 409 pressed down, bullets are fired from the gun JO in the direction of the sights AO.

When the user P presses the button 409, the player character PC holds the gun JO at the ready and the sights AO are displayed on the game screen G. Thereafter, if the user P continues the pressing operation of the button 409, the sights AO continue to be displayed. On the other hand, when the user P releases the pressing operation of the button 409, the sights AO will be hidden. The button 409 is thus an operation member for instructing the player character PC to assume the posture of holding the gun JO at the ready, as well as being an operation member for instructing display of the sights AO.

FIG. 9 is a block diagram showing an internal configuration of the stick controller 4. Note that the same numerals are given to members that are the same as members shown in FIG. 4A and FIG. 4B.

A control unit 410 and a posture detection unit 412, an operation unit 413 and a signal transmission unit 414 that are interconnected to the control unit 410 via an I/O interface unit 411 are provided in the stick controller 4. The control unit 410 is constituted by a microcomputer and controls the overall operations of the stick controller 4. In the microcomputer, a ROM 410b and a RAM 410c are interconnected to a well known CPU 410a. The I/O interface unit 411 mediates transmission and reception of data and signals between the control unit 410 and the posture detection unit 412, the operation unit 413, the signal transmission unit 414 and the light emitting unit 402.

The posture detection unit 412 includes the angular velocity sensor 403. The posture detection unit 412 samples signals output from the angular velocity sensor 403 at a prescribed period (e.g., 12 milliseconds), and detects the respective angular velocities $\omega u$, $\omega v$, and $\omega w$ around the U, V and W axes of the UVW coordinate system. The posture detection unit 412 transmits information on the detected angular velocities $\omega u$, $\omega v$, and $\omega w$ to the device main body 2 via the signal transmission unit 414.

The operation unit 413 inputs operation information of the button 404, the button 405, the button 406, the start button 407, the select button 408 and the button 409 to the control unit 410. The signal transmission unit 414 transmits angular velocity information of the stick controller 4 detected by the posture detection unit 412 and operation information input from the operation unit 413 to the device main body 2 by short-range wireless communication.

Next, a method of controlling the display position of the sights AO displayed on the display screen 6a of the display 6 will be described.

The display position of the sights AO on the display screen 6a of the display 6 is, as shown in FIG. 11, decided by converting the position coordinates (Xcs, Ycs) of the stick controller 4 in the XYZ coordinate system set in the camera 7 into the position coordinates (Ics, Jcs) of the IJ coordinate system (in units of pixels) set in the display screen 6a of the display 6.

The position coordinates (Xcs, Ycs) of the stick controller 4 are calculated by correcting the position coordinates (Xc, Yc, Zc) (see FIG. 5) of the stick controller 4 acquired from images captured by the camera 7. The position coordinates (Xc, Yc, Zc) of the stick controller 4 are corrected using the coordinates (Xs, Ys, Zs) of posture vectors calculated from the posture information ($\theta u$, $\theta v$, $\theta w$) of the stick controller 4.

First, a method of acquiring the current position coordinates of the stick controller 4 from images captured by the camera 7 will be described using FIG. 10.

As shown in FIG. 10, the light emitting unit 402 of the stick controller 4 is in an object plane positioned a distance D in the front of an image capture lens 701 of the camera 7. Also, an imaging plane is a distance d (focal length) behind the image capture lens 701. For example, a relation $Yc \times d = yc \times D$ is established between the Y coordinate Yc of the light emitting unit 402 in the object plane and the Y coordinate yc of the optical image of the light emitting unit 402 in the imaging plane. The Y coordinates Yc can be derived by an arithmetic equation $Yc = yc \times D/d$, using the Y coordinate yc of the optical image of the light emitting unit 402 in the imaging plane. Similarly, the X coordinate Xc of the light emitting unit 402 in the object plane can be derived by an arithmetic equation $Xc = xc \times D/d$, using the X coordinate xc of the optical image of the light emitting unit 402 in the imaging plane.

Note that at the XY coordinates (xc, yc) of the optical image of the light emitting unit 402 in the imaging plane, the optical image of the light emitting unit 402 will be circular. Thus, the XY coordinates (xc, yc) of the optical image of the light emitting unit 402 can be acquired by deriving the center coordinates of the optical image. The light-emission color of the light emitting unit 402 is set in the device main body 2 and the stick controller 4 in advance. Thus, the XY coordinates (xc, yc) of the optical image of the light emitting unit 402 can be acquired by extracting a circular image having the light emission color of the light emitting unit 402 from among the images captured by the camera 7, and computing the center position of the circular image in the imaging plane.

In the above equations, the distance d is the focal length (known) of the camera 7. Also, provided that the orthogonal coordinates XY are set in the center of a captured image, the X coordinate xc and the Y coordinate yc are obtained by calculating the light emission position in the XY coordinate system thereof. Also, the distance D, being the distance from the image capture lens 701 to the object plane, is equivalent to the Z coordinate Zc of the light emitting unit 402. A relational equation $Yc0 = yc0 \times Zc0/d$ is established, where (xc0, yc0) are the coordinates of the light emission position in a captured image when the light emitting unit 402 is placed in a preset reference position (Xc0, Yc0, Zc0). When d = $yc0 \times Zc0/Yc0$ obtained from this relational equation is substituted into $Yc = yc \times D/d$, the Z coordinate Zc can be calculated by $Zc = D = Zc0 \times (Yc/yc) \times (yc0/Yc0)$. That is, provided that $K = Zc0 \times yc0/Yc0$ is calculated in advance, the Z coordinate Zc can be calculated by $Zc = K \times Yc/yc$. Note that K can also be calculated with $K = Zc0 \times xc0/Xc0$, and Zc can also be calculated with $Zc = K \times Xc/xc$.

The area of the optical image of the light emitting unit 402 in the imaging plane can be calculated using the number of pixels included in the optical image. The data of a standard distance D0 and a standard area s0 of the optical image of the light emitting unit 402 at the distance D0 that are preset is stored as data for calculating the distance D. Subsequently, provided that an area s of the optical image of the light emitting unit 402 at the distance D is calculated, an arbitrary distance D of the light emitting unit 402 can be calculated by computing $D = s \times D0/s0$.

Next, a method of calculating the position coordinates (Xcs, Ycs) by correcting the position coordinates (Xc, Yc, Zc) of the stick controller 4 using the posture information ($\theta u$, $\theta v$, $\theta w$) of the stick controller 4 acquired from the detection values of the posture detection unit 412 will be described.

First, the current posture vector of the stick controller 4 is calculated. The current posture vector is obtained by rotating the posture vector of the stick controller 4 in the reference posture by the rotation angles $\theta u$, $\theta v$ and $\theta w$ calculated from the detection values of the posture detection unit 412. The current posture vector indicates the direction in which the stick controller 4 is currently pointing in the XYZ coordinate system.

Next, processing for adding correction values (Xs×t, Ys×t) based on the current posture information to the current position information (Xc, Yc) of the stick controller 4 is performed to correct the current position information (Xc, Yc). That is, the corrected current position information (Xcs, Ycs) is calculated, by performing the arithmetic processing:

$$Xcs = Xc + (Xs \times t) \qquad (1)$$

$$Ycs = -Yc+(Ys \times t) \quad (2)$$

$$t = -Zc/Zs$$

where $(Xs, Ys, Zs)$ are the components of the posture vector in the XYZ coordinate system of the camera 7.

Correction processing using the equations (1) and (2) improves the accuracy of movement control of the sights AO on the display screen 6a based on the position information of the stick controller 4 in the XYZ coordinate system of the camera 7. For example, when the stick controller 4 is shaken so that the light emitting unit 402 moves backwards and forwards with the stick controller 4 held in a vertically oriented posture such that the light emitting unit 402 is at the top, the X coordinate Xc and the Y coordinate Yc of the stick controller 4 remain substantially unchanged. In this case, the sights AO do not move on the display screen 6a even when the stick controller 4 shaken. Accordingly, in this case, the accuracy of movement control of the sights AO on the display screen 6a based on changes in the position and posture of the stick controller 4 decreases.

The equations (1) and (2) involve arithmetic processing for deciding the current position coordinates $(Xcs, Ycs)$ of the stick controller 4 in the XYZ coordinate system with allowance for changes in the posture of the stick controller 4 in changes in the position of the stick controller 4 as viewed from the camera 7. As a result of this arithmetic processing, minute changes in the position and posture of the stick controller 4 can be better reflected in movement control of the sights AO than when the current position coordinates $(Xc, Yc)$ of the stick controller 4 in the XYZ coordinate system are decided with only changes in the position of the stick controller 4 as viewed from the camera 7.

Note that the influence that changes in the posture of the stick controller 4 exert on the position information $(Xc, Yc)$ is adjusted by correction that involves multiplying the coordinates $(Xs, Ys)$ of the posture vector in the equations (1) and (2) by coefficient $t = -Zc/Zs$. In the present embodiment, the coefficient t is $t = -Zc/Zs$, in order to increase the influence of changes in the posture of the stick controller 4 when the stick controller 4 is positioned far from the monitor (camera 7) than the stick controller 4 being at a close position. This is because the movement of the light emitting unit 402 is more difficult to accurately detect when the stick controller 4 is positioned far from the camera 7 as compared to when positioned close. Note that the position information $(Xc, Yc)$ may be adjusted with another correction method. Alternatively, the position information $(Xc, Yc)$ need not be adjusted by correction using the coefficient t. That is, a configuration may be adopted in which the position coordinates $(Xcs, Ycs)$ are calculated by $Xcs = Xc+Xs$ and $Ycs = -Yc+Ys$.

Next, the position coordinates $(Xcs, Ycs)$ of the corrected stick controller 4 are converted into a display position on the display screen 6a. This conversion processing involves setting an origin O of the display position on the display screen 6a in the lower left corner of the display screen 6a, for example, as shown in FIG. 11. Also, the change processing involves converting the position coordinates $(Xcs, Ycs)$ of the stick controller 4 in the XYZ coordinate system of the camera 7 into the position coordinates $(Ics, Jcs)$ of the IJ coordinate system of the display screen 6a, when the horizontal pixel position is taken as the I coordinate and the vertical pixel position is taken as the J coordinate.

In this conversion processing, conversion is performed such that the position coordinates $(Xcs, Ycs)$ of the stick controller 4 calculated by the equations (1) and (2) will be a position $(n/2, m/2)$ in the middle of the display screen 6a when calibration processing has been performed on the stick controller 4, where the resolution of the display screen 6a is given as $n \times m$ (pixels) (n and m being even numbers). That is, when calibration processing is performed on the stick controller 4, the display position of the sights AO on the display screen 6a is reset to the middle of the screen.

When calibration processing is performed, the X coordinate Xs and the Y coordinate Ys of the posture vector in the XYZ coordinate system of the camera 7 are both reset to zero, as will be described later. The position coordinates $(Xcs, Ycs)$ of the stick controller 4 calculated by the equations (1) and (2) at this time are thus $(Xc, -Yc)$. Accordingly, conversion equations for converting the position coordinates $(Xcs, Ycs) = (Xc, -Yc)$ when calibration processing has been performed into a position $(n/2, m/2)$ in the middle of the display screen 6a are:

$$Ics = Xcs - Xc + n/2 \quad (3)$$

$$Jcs = Ycs - (-Yc) + m/2 \quad (4)$$

The processing for subtracting $(Xc, -Yc)$ from the position coordinates $(Xcs, Ycs)$ in the equations (3) and (4) is equivalent to processing for multiplying the position coordinates $(Xcs, Ycs)$ by an offset $(Xc, -Yc)$. Accordingly, when the offset value thereof is given as $(Xos, Yos)$, the equations (3) and (4) for converting the display position denotes processing for:

(i) setting offset values $(Xos, Yos) = (Xc, -Yc)$, using the position coordinates $(Xc, Yc)$ of the stick controller 4 acquired from the image captured by the camera 7 when the calibration processing was performed;
(ii) correcting the position coordinates $(Xcs, Ycs)$ of the stick controller 4 calculated using the equations (1) and (2) with the offset values (Xos, Yos).

(iii) respectively adding n/2 and m/2 to the corrected X and Y coordinates.

Accordingly, the conversion equations for converting the position coordinates (Xcs, Ycs) of the stick controller 4 in the XYZ coordinate system of the camera 7 into the position coordinates (Ics, Jcs) of the IJ coordinate system of the display screen 6a are:

$$Ics = Xcs–Xos+n/2 \quad (5)$$

$$Jcs = Ycs–Yos+m/2 \quad (6)$$

Next, the calibration processing will be described.

The calibration processing is executed as a result of the user P pressing the button 409. As a result of the calibration processing, the posture information ($\theta$u, $\theta$v, $\theta$w) of the stick controller 4 at that time is reset to zero, and the display position of the sights AO on the display screen 6a of the display 6 is reset to the middle of the screen (n/2, m/2).

When the button 409 is pressed, the posture information ($\theta$u, $\theta$v, $\theta$w) of the stick controller 4 at that time is reset to (0, 0, 0), and the coordinates (Xs, Ys) of the posture vector will be (0, 0). The position coordinates (Xcs, Ycs) of the stick controller 4 will thereby be (Xcs, Ycs) = (Xc, -Yc) from the equations (1) and (2).

Accordingly, in the calibration processing, the values (Xc, -Yc) are set as the offset values (Xos, Yos) from the position coordinates (Xc, Yc, Zc) of the stick controller 4 acquired from the image captured by the camera 7 when the button 409 was pressed. The position information (Xcs, Ycs) is reset to (0, 0) by subtracting the offset values (Xos, Yos) from the position information (Xcs, Ycs) calculated by the equations (1) and (2).

Position information (Xcs, Ycs) = (0, 0) is equivalent to a state where the light emitting unit 402 is on the Z axis of the XYZ coordinate system in FIG. 5. Accordingly, the calibration processing disposes the stick controller 4 so that the light emitting unit 402 is positioned on the Z axis of the XYZ coordinate system relative to the camera 7 in a virtual manner. That is, as a result of the calibration processing, the posture of the stick controller 4 at that time is set as the reference posture.

During a game, the user P is able to move the stick controller 4 freely and change the posture thereof freely within the space of the XYZ coordinate system. However, when the user P presses the button 409 at an arbitrary timing, the position of the light emitting unit 402 in the XYZ coordinate system at that time moves in a virtual manner to the Z axis of the XYZ coordinate system (hereinafter, the position moved to is called the "reference position"), and the posture of the stick controller 4 at that time is set as the reference posture. Accordingly, when the pressing operation of the button 409 is being continued, control of the display position of the sights AO on the display screen 6a of the display 6 is performed, based on changes in the position and the posture of the stick controller 4 relative to the stick controller 4 in the reference posture at the reference position.

For example, suppose that the resolution of the display screen 6a is 1280×720 (pixels), and the position coordinates (Xcs, Ycs) of the stick controller 4 when the user P presses the button 409 are (500, 600). In this case, the offset values (Xos, Yos) are (500, 600). The display position (Ics, Jcs) of the sights AO on the display screen 6a of the display 6 at this time is Ics = 500-500+1280/2 = 640 and Jcs = 600-600+720/2 = 360.

Thereafter, when the position coordinates (Xcs, Ycs) of the stick controller 4 moves to (600, 650) as a result of the user P shaking the stick controller 4 with the button 409 pressed down, the display position of the sights AO moves to a position (740, 410) (pixels) on the display screen 6a. This is because Ics = 600-500+1280/2 = 740 and Jcs = 650-600+720/2 = 410. Accordingly, the display position of the sights AO moves (+100, +50) from the middle of the screen.

Next, processing for displaying the sights AO on the display screen 6a of the display 6, and controlling the display position of the sights AO by motion control of the stick controller 4 will be described.

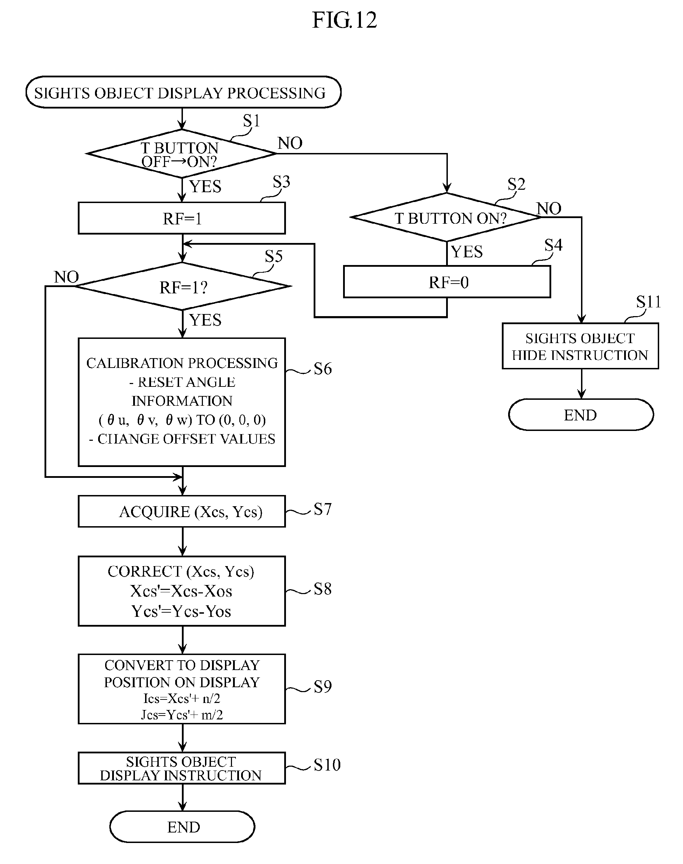

FIG. 12 is a flowchart showing a processing procedure for displaying the sights AO on a game image at the time of generating the game image of each frame at the frame period. The processing of the flowchart is performed by the CPU 201 a at T (seconds) intervals, where the frame period is T (seconds).

The CPU 201 a first distinguishes the state of the button 409 of the stick controller 4. That is, the CPU 201 a judges whether the button 409 was pressed (whether the operation signal of the button 409 was inverted from a low level to a high level) (S1). Also, the CPU 201 a distinguished whether the pressing operation of the button 409 is ongoing (whether the operation signal of the button 409 is maintaining the high level) (S2).

When it is distinguished that the pressing operation of the button 409 was released and that the released state is ongoing, a hide object instruction for hiding the sights AO is output to the render processing unit 202 (S11), and the processing is ended. The render processing unit 202 stops the display processing of the sights AO as a result of this hide object instruction. Accordingly, the sights AO are no longer displayed on the display screen 6a of the display 6.

Note that the CPU 201 a distinguishes that the pressing operation of the button 409 was released, when, for example, the operation signal of the button 409 is distinguished to be at the high level the previous time and to have inverted to the low level this time. Also, the CPU 201 a distinguishes that release of the pressing operation of the button 409 is ongoing, when the operation signal of the button 409 is distinguished to be at the low level both the previous time and this time.

On the other hand, the CPU 201 a, having distinguished that there was a pressing operation of the button 409 (S1: YES), sets a reset flag RF to "1" (S3). Also, the CPU 201 a, having distinguished that the pressing operation of the button 409 is being maintained (S2: YES), resets the reset flag RF to "0" (S4). Thereafter, the CPU 201 a processes an instruction for displaying the sights AO on the display screen 6a of the display 6 at step S5 onward.

Note that the CPU 201 a distinguishes that pressing operation of the button 409 was carried out, when the operation signal of the button 409 was distinguished to be at the low level last time and to have been inverted to the high level this time. Also, when the operation signal of the button 409 is distinguished to be at the high level both the previous time and this time, the CPU 201 a distinguishes that the pressing operation of the button 409 is being maintained.

The reset flag RF controls the calibration processing of the stick controller 4. A reset flag RF of "1" indicates that calibration processing is to be performed, and a reset flag RF of "0" indicates that calibration processing is not to be performed.

The CPU 201 a does not perform the setting process of the reset flag RF, when it is distinguished that the pressing operation of the button 409 was released and the released state is ongoing (when NO at S2). The reason is that because processing for displaying the sights AO on the display screen 6a of the display 6 is not performed in this case, the reset flag RF does not need to be changed from the state set when the level of the operation signal was last distinguished. Note that the logic of the reset flag RF may be the opposite of the contents described above.

When the processing transitions to step S5, the CPU 201 a distinguishes whether the reset flag RF is set to "1". If the reset flag RF is set to "1" (S5: YES), the CPU 201 a performs calibration processing on the stick controller 4 (S6). If the reset flag RF is set to "0" (S5: NO), the CPU 201 a transitions to step S7, without performing calibration processing on the stick controller 4.

In the calibration processing, the CPU 201 a resets the posture information $(\theta u, \theta v, \theta w)$ obtained by integrating the angular velocity information $(\omega u, \omega v, \omega w)$ transmitted from the stick controller 4 to (0, 0, 0). Also, the CPU 201 a sets the position information (Xcs, Ycs) = (Xc, -Yc) of the stick controller 4 calculated by the (1) and (2) equations as the offset values (Xos, Yos) (S6).

Note that the offset values (Xos, Yos) are initialized in the calibration processing performed at the start of a game. The user P carries out a prescribed operation for performing calibration processing at the start of a game with the light emitting unit 402 oriented toward the camera 7 at a position substantially in front of the camera 7. Because the position coordinates (Xcs, Ycs) acquired in this calibration processing are (0, 0), the offset values (Xos, Yos) at the time of initialization is (0, 0). When the user P, after having started a game, presses the button 409 for the first time during the game, the CPU 201 a, at step S6, changes the offset values (0, 0) to the position information (Xc, -Yc) of the stick controller 4 calculated at that time.

Having transitioned to step S7, the CPU 201 a acquires the coordinates (Xcs, Ycs) in XY plane of the XYZ coordinate system of the light emitting unit 402 at that time from the object position calculation unit 204. These coordinates (Xcs, Ycs) are calculated by computing the equations (1) and (2), using the coordinates (Xc, Yc, Zc) of the light emitting unit 402 in the XYZ coordinate system and the coordinates (Xs, Ys, Zs) of the posture vector of the stick controller 4 in the XYZ coordinate system with the object position calculation unit 204.

Next, the CPU 201 a subtracts the offset values (Xos, Yos) from the position information (Xcs, Ycs) acquired at step S7 to correct the position information (Xcs, Ycs) (S8).

The CPU 201 a performs calibration processing when the button 409 is pressed. Assuming the position information (Xcs, Ycs) of the stick controller 4 is (Xc, -Yc), the CPU 210a sets this position information as the offset values (Xos, Yos). Accordingly, the corrected values (Xcs', Ycs') of the position information (Xcs, Ycs) of the stick controller 4 are (0, 0). On the other hand, when the posture of the stick controller 4 has changed after calibration processing, the CPU 201 a changes the position information (Xcs, Ycs) of the stick controller 4 to Xcs = Xc+(Xs×t) (Xs ≠ 0) and Ycs = -Yc+(Ys×t) (Ys ≠ 0) from the equations (1) and (2). Accordingly, the corrected values (Xcs', Ycs') of the position information (Xcs, Ycs) of the stick controller 4 are (Xcs-Xc, Ycs+Yc).

Next, the CPU 201 a calculates the position coordinates (Ics, Jcs) (in units of pixels) for displaying the sights AO on the display screen 6a of the display 6 by respectively adding "n/2" and "m/2" to the corrected position coordinates Xcs' and Ycs' (S9).

Next, the CPU 201 a outputs an object display instruction for displaying the sights AO at the calculated position coordinates (Ics, Jcs) to the render processing unit 202 (S10), and ends the processing. The render processing unit 202 performs processing for displaying the sights AO at the position coordinates (Ics, Jcs) on the display screen 6a of the display 6 as a result of this object display instruction. The sights AO are thereby displayed on the display screen 6a of the display 6.

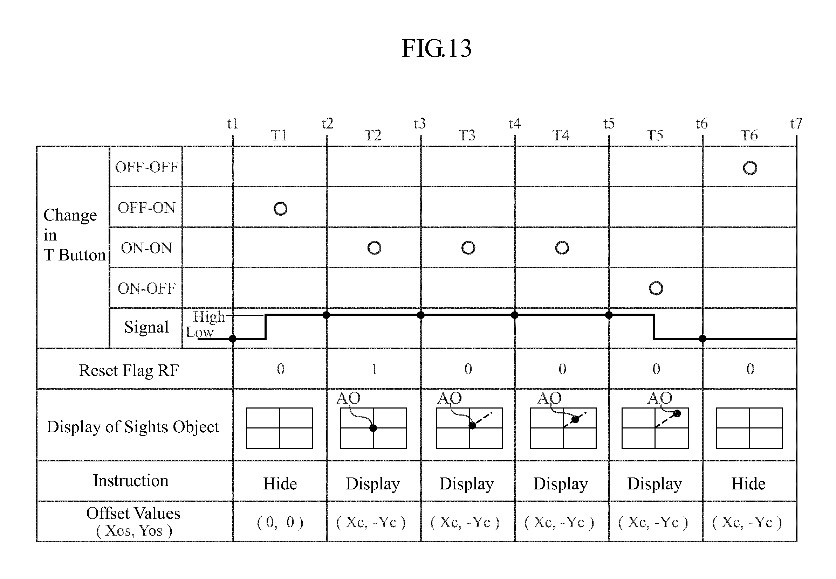

FIG. 13 shows an example of changes in processing contents when the CPU 201 a executes the flowchart of FIG. 12 over several frames.

In this diagram, t1, t2, ..., t6 and t7 is the timing at which the render processing unit 202 generates game images. The timing interval is a frame period, and processing for generating a game image is performed during this interval. When the sights AO need to be displayed, processing for displaying the sights AO is performed in combination with the game image generation processing. Note that T1, T2, ..., T6 are signs given in order to identify the individual frame periods.

In the field "Change in T Button" in this diagram, the field "signal" indicates the level change of the operation signal of the button 409. The fields "OFF-OFF", "OFF-ON", "ON-ON", and "ON-OFF" indicate the corresponding state of the change in the operation signal of the button 409 in each frame period.

The circle mark given to the field "OFF-ON" in the frame period T1 indicates that the operation signal of the button 409 changed from the low level (OFF state) to the high level (ON state) in this period. Also, the circle mark given to the field "ON-ON" in the frame periods T2, T3 and T4 indicates that the operation signal of the button 409 was maintained at the high level (ON state) in these periods. Also, that the circle mark given to the field "ON-OFF" in the frame period T5 indicates that the operation signal of the button 409 changed from the high level (ON state) to the low level (OFF state) in this period.

The field "Reset Flag RF" indicates the contents of the reset flag RF. The reset flags RF of the frame periods T1 and T4 to T6 are "0" because the state of the reset flags RF in the frame periods T1, T4, T5 and T6 is maintained the same as the frame period immediately before each of these frame periods. On the other hand, the reset flag RF of the frame period T2 is "1" because the pressing of the button 409 in the frame period T2 was detected in the frame period T2, and calibration processing was performed by generating a game image at timing t3. Also, the reset flag RF of the frame period T3 is "0" because the reset flag RF set to "1" at the frame period T2 is reset at the frame period T3, since calibration processing is only performed when the button 409 is pressed.

The field "Display of Sights Object" shows examples of the display position of the sights AO on the display screen 6a of the display 6. The field "Instruction" shows instruction contents relating to display of the sights AO that is output to the render processing unit 202 from the CPU 201 a. Also, the field "Offset Values" shows the contents of the offset values (Xos, Yos) in each frame period.

As shown in FIG. 13, the sights AO are only displayed on the display screen 6a of the display 6 during the frame periods T2 to T5 in which it is detected that the button 409 has been pressed and the pressing state is ongoing. In the frame period T2 immediately after the pressing operation of the button 409 was detected, the sights AO are initially displayed in the middle of the display screen 6a of the display 6. Thereafter, the display position of the sights AO on the display screen 6a moves from the middle in response to the stick controller 4 being shaken with the button 409 pressed down.

Because the reset flag RF has been reset to "0" in the frame period T1 in which the button 409 is not being pressed, the offset values (Xos, Yos) are held at the initial values (0, 0). However, in response to the pressing operation of the button 409 being detected and the reset flag RF being set to "1" at the frame period T2, the offset values (Xos, Yos) are updated with the position coordinates (Xc, -Yc) of the stick controller 4 calculated at that time. Those offset values (Xc, -Yc) are held until the pressing operation of the button 409 is subsequently detected.

According to the present embodiment, as described above, when the user P presses the button 409 and the sights AO are displayed on the display screen 6a of the display 6, calibration processing for resetting the posture information (θu, θv, θw) of the stick controller 4 at that time to zero is performed. Accordingly, the user P does not need to carry out an operation for performing calibration processing that is unrelated to game operations during a game, and is able to focus on the game.

Also, because the game is not interrupted in order to perform calibration processing, the user P is not subjected to the stress of the game being interrupted.

Also, when calibration processing is executed, the sights AO move to the middle of the display screen 6a. Accordingly, the user P is able to easily confirm that the calibration processing has definitely been performed.

Also, the operation of the player character PC holding the gun JO at the ready also serves as an operation for performing calibration. Thus, the user P does not need to separately set an operation for calibrating the stick controller 4 in the controller 5. Accordingly, multiplexing of the operations of buttons or keys of the controller 5 can be reduced.

Also, calibration processing is performed when the sights AO are displayed on the display screen 6a of the display 6. Error in subsequent posture information of the stick controller 4 (respective rotation angles θu, θv and θw around U, V and W axes) can thereby be suppressed. In particular, in the present embodiment, calibration processing is performed every time display processing of the sights AO is performed. Thus, error in the posture information of the stick controller 4 does not accumulate. Accordingly, movement of the sights AO on the display screen 6a can be controlled as accurately as possible based on the operation of the user P shaking the stick controller 4.

Note that posture information (θu, θv, θw) may be calculated by performing integration of the angular velocity information (ωu, ωv, ωw) detected by the angular velocity sensor 403 with the posture detection unit 412 in the stick controller 4, and the posture information may be transmitted to the device main body 2 from the stick controller 4.

In this case, the posture detection unit 412 resets the posture information (θu, θv, θw) when the button 409 is pressed. Also, the device main body 2 need only be configured so as to recognize the fact that calibration processing has been performed with the stick controller 4 as a result of a signal indicating the pressing operation of the button 409 being received from the stick controller 4. Alternatively, a configuration may be adopted in which a signal indicating that calibration processing has been performed is transmitted from the stick controller 4 to the device main body 2, and calibration processing is recognized as a result of that signal. Conversely, a configuration may be adopted in which the device main body 2, on receiving a signal indicating the pressing operation of the button 409 from the stick controller 4, instructs the stick controller 4 to execute calibration processing.

Also, although a button provided on the stick controller 4 is set as a button for performing calibration processing in the above embodiment, a button provided on the pad controller 3 may be set as such a button. Also, calibration processing may be performed by operating an analog stick provided to the pad controller 3, rather than by pressing the button of a press button switch such as the button 409.

Also, although the button for instructing display of the sights AO and the button for instructing hiding of the sights AO share the same button (button 409 of the stick controller 4) in the above embodiment, they may be different buttons.

Also, although an action game in which the user P operates both the pad controller 3 and the stick controller 4 to play a game was described, the present invention is not limited thereto. That is, the present invention can also be applied to a game that uses only the stick controller 4.

Also, in the above embodiment, an example was described in which the sights AO are displayed on the display screen 6a of the display 6, and the sights AO move on the display screen 6a. However, with respect to games for operating a character or object displayed on the display screen 6a by changing the position or posture of a controller provided with a sensor capable of detecting posture, the present invention can be widely applied to games configured to perform calibration processing at a timing that enables operation of the character or object by an operation for changing the position or posture of the controller during a game.

Also, although the controller is separate from the main body of the game device in the above embodiment, the present invention is not limited thereto. That is, with respect to game-enabled devices in which the controller and the display are incorporated in the device main body as with a portable game device, a portable telephone device or a notebook computer, it should be obvious that the present invention can also be applied to a device having a device main body provided with a sensor that is able to detect posture. In this case, the device main body can be considered as the controller.

Accordingly, the present invention does not require operation of a button for instructing display of a character or an object as a trigger for performing calibration processing, as with the above embodiment. In the present invention, a configuration can be adopted such that when, in a state where a character or object is displayed on the display screen 6a of the display 6, a condition enabling control by an operation for changing the position or posture of the controller relative to the character or object is established, calibration processing is performed at the time that the condition is established.

Conceivable conditions include operation of a specific button provided in the controller (includes controllers that are separate from the game device and controllers that are incorporated in the game device) by the user P, and the game scene switching to a specific scene independently of an operation by the user P.

Conceivable conditions under which a specific button is operated include, for example, a configuration in which, when a missile attack is carried out on the player character by an enemy character in an action game, the missile can be avoided by changing the posture of the player character as a result of an operation for changing the position or posture of the controller when the user presses a specific button on the controller. With this configuration, because pressing of the specific button is the condition, calibration processing is performed when the user presses the specific button. Then, when the user subsequently carries out an operation of tilting the controller fore/aft or to the left/right, the player character on the display screen is able to avoid the missile by leaning his or her upper body up/down or to the left/right according the user operation.

Also, conceivable conditions in which a game scene switches to a specific scene include, for example, a configuration in which, when an enemy character carries out a specific type of attack in the action game, such as a missile attack, an operation for changing the posture of an operation device of the game is automatically enabled for a period until the end of the attack. The attack ends when the missile hits the player character PC or another object or disappears without hitting anything.

With this configuration, the condition is an enemy character carrying out a specific kind of attack such as a missile attack. In other words, calibration processing is performed when an enemy character performs a missile attack. Then, when the user subsequently carries out an operation of tilting the controller fore/aft or to the left/right, the player character on the display screen is able to avoid the missile by leaning his or her upper body up/down or to the left/right according to the user operation.

Also, other conceivable game genres include a game that involves changing the posture of the controller to move an object such as a ball through a maze displayed on the display. This type of game includes games whose objective is to move a ball from a start point in a maze to a goal point within a predetermined fixed period of time or competitive games that involve competing with other users to see who can move the ball the fastest. In this type of game, the ball is always set at the start point of the maze. In this case, an operation for changing the position and the posture of the controller is enabled for a period until the ball reaches the goal point after a condition for starting the ball moving is established (period until a fixed time period elapses when the ball has not reach the goal point within the fixed period of time).

A conceivable condition for starting the ball moving in a competitive game is, for example, the user operating a specific button after the ball has been set at the start point of the maze. In this case, when the user operates the specific button at an arbitrary timing after a game is started, calibration processing is performed at that timing. In this case, the condition for performing calibration processing is the user operating the specific button after the start of a game.

Also, another conceivable condition is the end of a countdown performed by a computer after the ball is set at the start point of the maze. In this case, calibration processing is performed when the countdown ends after the computer has performing prescribed screen processing such as setting the ball at the start point of the maze when a game is started. Accordingly, in this case the condition for performing calibration processing is the computer performing processing for notifying the user of the start of timing of the time period for moving the ball.

Also, although an example in which an angular velocity sensor is used as the posture sensor was described in the above embodiment, the present invention is not limited thereto. That is, it should be obvious that the present invention can also be applied to a case where a change in the posture of the stick controller 4 is detected using another type of sensor such as an acceleration sensor, for example.

Also, although the above embodiment was described taking an action game as an example, the present invention can also be applied to games of various genres, such as RPGs (Role Playing Games), shooting games, fighting games, and adventure games, for example. The present invention can also be applied to games in which an alter ego of the user called an Avatar is introduced into and experiences life in a virtual world provided by Second Life®, "PlayStation® Home or the like.

The present invention can also be applied to games in which characters operated by a plurality of users or the characters controlled by the CPU form teams and cooperate in playing against enemy characters, or games for playing against a character operated by another user as an enemy character.

Also, although an off-line game device was described in the above embodiment, it should be obvious that the present invention can also be applied to an online game.

Also, although the embodiment above is described with reference to a game to be implemented on a home game device or a portable game device, the present invention is not limited thereto. That is, the present invention can also be applied to the case where a game is implemented on an arcade game device, a personal computer on which game software has been installed, or the like, for example.

**Claims**

1. A computer comprising:

a posture change amount calculation unit that receives a detection value of a posture sensor provided in an operation device of a game, and calculates an amount of change in posture from a reference posture of the operation device, based on the detection value;
an object control unit that controls an object of the game, based on the amount of change in posture of the operation device calculated with the posture change amount calculation unit; and
a reset unit that, when a prescribed condition is established during execution of the game, resets the reference posture of the operation device for calculating the amount of change in posture with the posture change amount calculation unit.

2. The computer according to claim 1, wherein establishment of the prescribed condition denotes receipt of an operation signal indicating that a prescribed operation member of the operation device used to progress through the game was operated by a user.

3. The computer according to claim 2, wherein the prescribed operation member is a first operation member for instructing a start of operation of the object by the user, and the object control unit controls the object, based on the amount of change in posture of the operation device, during a period from when an operation signal indicating operation of the first operation member by the user is received until when an operation signal of a second operation member for instructing an end of operation of the object by the user is received.

4. The computer according to claim 3, wherein the object control unit includes:

an initial display control unit that displays the object at a preset initial position on a display screen of a display device, based on the amount of change in posture of the operation device that was reset by the reset unit, when the operation signal indicating operation of the first operation member by the user is received; and
a display position control unit that controls a display position of the object displayed on the display screen, until the operation signal indicating operation of the second operation member by the user is received, based on the amount of change in posture of the operation device calculated with the posture change amount calculation unit after resetting.

**5.** The computer according to claim 3,
wherein the reset unit resets the reference posture of the operation device, when the operation signal indicating operation of the first operation unit provided in the operation device by the user is received, and
the object control unit controls the object based on the amount of change in posture of the operation device, during a period from when the operation signal indicating operation of the first operation member by the user is received until when the operation signal indicating operation of the second operation member provided in the operation device by the user is received.

**6.** The computer according to claim 3,
wherein the first operation member and the second operation member are composed of a momentary on-off switch, and
the operation signal indicating operation of the first operation member by the user that is received by the computer is an operation signal indicating that the momentary on-off switch was pressed, and an operation signal indicating operation of the second operation member by the user that is received by the computer is an operation signal indicating that pressing of the momentary on-off switch was released.

**7.** The computer according to claim 4, wherein the initial position is a middle position of the display screen.

**8.** The computer according to claim 1,
wherein the posture sensor is an angular velocity sensor, and
the posture change amount calculation unit calculates a rotation angle obtained by integrating angular velocity detection values detected by the angular velocity sensor as an amount of change in posture from the reference posture of the operation device.

**9.** The computer according to claim 1, wherein the object is an object displayed in order to assist the operation, when the user inputs prescribed operation information from the operation device to a game screen displayed on the display device.

**10.** The computer according to claim 9,
wherein the game screen is a game screen that includes a shooting element, and
the object is a reference object that indicates a target of the shooting.

**11.** A computer-readable recording medium having recorded thereon a program for causing a computer to function as:

a posture change amount calculator for receiving a detection value of a posture sensor provided in an operation device of a game, and calculating an amount of change in posture from a reference posture of the operation device, based on the detection value;
an object controller for controlling an object of the game, based on the amount of change in posture of the operation device calculated with the posture change amount calculator; and
a resetter for resetting the reference posture of the operation device for calculating the amount of change in posture of the posture change amount calculator, when a prescribed condition is established during execution of the game.

**12.** The recording medium according to claim 11, wherein establishment of the prescribed condition denotes receipt of an operation signal indicating that a prescribed operation member of the operation device used to progress through the game was operated by a user.

**13.** The recording medium according to claim 12,
wherein the prescribed operation member is a first operation member for instructing a start of operation of the object by the user, and
the object controller controls the object, based on the amount of change in posture of the operation device, during a period from when an operation signal indicating operation of the first operation member by the user is received until when an operation signal of a second operation member for instructing an end of operation of the object by the user is received.

**14.** The recording medium according to claim 13, wherein the object controller includes:

an initial display controller for displaying the object at a preset initial position on a display screen of a display device, based on the amount of change in posture of the operation device that was reset by the resetter, when the operation signal indicating operation of the first operation member by the user is received; and
a display position controller for controlling a display position of the object displayed on the display screen, until the operation signal indicating operation of the second operation member by the user is received, based on the amount of change in posture of the operation device calculated with the posture change amount calculator after resetting.

**15.** The recording medium according to claim 13,
wherein the resetter resets the reference posture of the operation device, when the operation signal indicating operation of the first operation member provided in the operation device by the user is received, and

the object controller controls the object based on the amount of change in posture of the operation device, during a period from when the operation signal indicating operation of the first operation member by the user is received until when the operation signal indicating operation of the second operation member provided in the operation device by the user is received.

16. The recording medium according to claim 13, wherein the first operation member and the second operation member are composed of a momentary on-off switch, and
the operation signal indicating operation of the first operation member by the user that is received by the computer is an operation signal indicating that the momentary on-off switch was pressed, and an operation signal indicating operation of the second operation member by the user that is received by the computer is an operation signal indicating that pressing of the momentary on-off switch was released.

17. The recording medium according to claim 14, wherein the initial position is a middle position of the display screen.

18. The recording medium according to claim 11, wherein the posture sensor is an angular velocity sensor, and
the posture change amount calculator calculates a rotation angle obtained by integrating angular velocity detection values detected by the angular velocity sensor as an amount of change in posture from the reference posture of the operation device.

19. The recording medium according to claim 11, wherein the object is an object displayed in order to assist the operation, when the user inputs prescribed operation information from the operation device to a game screen displayed on the display device.

20. The recording medium according to claim 19, wherein the game screen is a game screen that includes a shooting element, and
the object is a reference object that indicates a target of the shooting.

## FIG.1

## FIG.2

FIG.3

## FIG.4A

## FIG.4B

FIG.5

C (Xc, Yc, Zc)

4

Y

7

Yc

X

Xc

Z    Zc

FIG.6

4

405

V    ωv, θv

W    ωw, θw

404

0    ωu, θu

407    402    U

401

## FIG.7

(Ics, Jcs)

AO

Jcs

Ics

6a

## FIG.8

Posture 1
(reference posture)

Posture 2

Posture 3

$\theta v$

$\theta w$

$\theta u$

## FIG.9

4

410a — CPU — ROM — 410b — 410

410c — RAM

411

I/O Interface Unit

412    413    414    402

Posture Detection Unit

Operation Unit

Signal Transmission Unit

Light Emitting Unit

FIG.10

C(Xc, Yc)

402

Y

Yc

Xc

Z

X

Object Plane

701

d

Imaging Plane

Y

X

(xc, yc)

D

FIG.11

J (Pixels)

(Ics, Jcs)

Y

C(Xcs, Ycs)

n

6a

0

0

m

X

I (Pixels)

XY Plane of XYZ Coordinate System

FIG.12

SIGHTS OBJECT DISPLAY PROCESSING

S1

T BUTTON OFF→ON?

NO

YES — S3

RF=1

S2

T BUTTON ON?

NO

YES — S4

RF=0

S11

SIGHTS OBJECT HIDE INSTRUCTION

END

S5

RF=1?

NO

YES

CALIBRATION PROCESSING
- RESET ANGLE INFORMATION
($\theta$ u, $\theta$ v, $\theta$ w) TO (0, 0, 0)
- CHANGE OFFSET VALUES

S6

ACQUIRE (Xcs, Ycs) — S7

CORRECT (Xcs, Ycs)
Xcs'=Xcs-Xos
Ycs'=Ycs-Yos

S8

CONVERT TO DISPLAY
POSITION ON DISPLAY
Ics=Xcs'+ n/2
Jcs=Ycs'+ m/2

S9

SIGHTS OBJECT
DISPLAY INSTRUCTION — S10

END

# FIG.13

| | | T1 | T2 | T3 | T4 | T5 | T6 |
|---|---|---|---|---|---|---|---|
| Change in T Button | OFF-OFF | | | | | | O |
| | OFF-ON | O | | | | | |
| | ON-ON | | O | O | O | | |
| | ON-OFF | | | | | O | |
| | Signal | High / Low | | | | | |
| Reset Flag RF | | 0 | 1 | 0 | 0 | 0 | 0 |
| Display of Sights Object | | | AO | AO | AO | AO | |
| Instruction | | Hide | Display | Display | Display | Display | Hide |
| Offset Values (Xos, Yos) | | (0, 0) | (Xc, -Yc) | (Xc, -Yc) | (Xc, -Yc) | (Xc, -Yc) | (Xc, -Yc) |

EP 2 554 225 A1

<table>
<tr><td colspan="2" align="center"><b>INTERNATIONAL SEARCH REPORT</b></td><td colspan="2">International application No.<br>PCT/JP2011/054711</td></tr>
</table>

| A. CLASSIFICATION OF SUBJECT MATTER |
|---|
| *A63F13/00*(2006.01)i, *A63F13/04*(2006.01)i, *G06F3/033*(2006.01)i, *G06F3/038* (2006.01)i |

According to International Patent Classification (IPC) or to both national classification and IPC

| B. FIELDS SEARCHED |
|---|
| Minimum documentation searched (classification system followed by classification symbols)<br>A63F13/00-13/12, A63F9/24, G06F3/033, G06F3/038 |

Documentation searched other than minimum documentation to the extent that such documents are included in the fields searched

| Jitsuyo Shinan Koho | 1922-1996 | Jitsuyo Shinan Toroku Koho | 1996-2011 |
|---|---|---|---|
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y<br><br>A | JP 2007-83013 A (Nintendo Co., Ltd.),<br>05 April 2007 (05.04.2007),<br>paragraphs [0055] to [0070], [0080] to [0098], [0102] to [0105]; fig. 23<br>& US 2007/0072680 A1    & US 2009/0062006 A1<br>& US 2007/0050597 A1    & US 2008/0311989 A1<br>& EP 1757345 A1         & DE 202006020820 U1<br>& CN 101837191 A      & CN 1919389 A<br>& CN 1919390 A | 1-2,8-12, 18-20<br>3-7,13-17 |
| Y | JP 2010-11891 A (Sega Corp.),<br>21 January 2010 (21.01.2010),<br>paragraphs [0028] to [0034]<br>(Family: none) | 1-2,8-12, 18-20 |

| ☒ Further documents are listed in the continuation of Box C. | ☐ See patent family annex. |
|---|---|

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>26 April, 2011 (26.04.11) | Date of mailing of the international search report<br>10 May, 2011 (10.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

| | International application No. |
|---|---|
| | PCT/JP2011/054711 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-301038 A  (Nintendo Co., Ltd.), 22 November 2007 (22.11.2007), paragraphs [0102], [0112] to [0115]; fig. 16 & US 2007/0265088 A1 | 1-20 |
| A | JP 2008-73184 A  (Namco Bandai Games Inc.), 03 April 2008 (03.04.2008), entire text; fig. 1 to 24 & US 2008/0070686 A1    & EP 1902760 A1 | 1-20 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009084213 A1
- JP 2009101035 A
- JP 2010005332 A